(19) **Europäisches Patentamt / European Patent Office / Office européen des brevets**

(11) **EP 4 783 022 A1**

(12) **EUROPEAN PATENT APPLICATION**
published in accordance with Art. 153(4) EPC

(43) Date of publication:
**29.07.2026 Bulletin 2026/31**

(21) Application number: **23953032.2**

(22) Date of filing: **20.09.2023**

(51) International Patent Classification (IPC):
*G06F 16/178* (2019.01)   *G06F 11/20* (2006.01)

(52) Cooperative Patent Classification (CPC):
**G06F 11/20; G06F 16/178**

(86) International application number:
**PCT/JP2023/034168**

(87) International publication number:
**WO 2025/062545 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **TERAZAWA, Hiroki**
  **Kawasaki-shi, Kanagawa 211-8588 (JP)**

• **UMEDA, Naoki**
  **Kawasaki-shi, Kanagawa 211-8588 (JP)**
• **MAEDA, Takuma**
  **Kawasaki-shi, Kanagawa 211-8588 (JP)**
• **SHIINOKI, Yuho**
  **Kawasaki-shi, Kanagawa 211-8588 (JP)**
• **SHIMOYAMA, Ryota**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MANAGEMENT DEVICE, MANAGEMENT METHOD, AND MANAGEMENT PROGRAM**

(57)    Under a production environment (E1), an autonomous management system (MS) detects a change in a parameter file (PF). In response to detection of the change in the parameter file (PF), the autonomous management system (MS) updates a parameter file (f1) included in a DB container (Cr1) according to the change, and writes the contents of the change into a parameter table (T1) provided in a database (DB1) included in the DB container (Cr1). Under a disaster recovery environment (E2), an autonomous management system (MS' ) detects a change in a parameter table (T1') in a database (DB1') included in a DB container (Cr1'). In response to detection of the change in the parameter table (T1'), the autonomous management system (MS') updates a parameter file (PF') according to the change.

FIG.6

**Description**

TECHNICAL FIELD

The present invention relates to a managing device, a managing method, and a recording medium.

BACKGROUND ART

Conventionally, it is important to take measures against disasters in business systems in preparation for unexpected situations such as natural disasters and human-made disasters. For example, in a system in which high availability is required, a disaster recovery environment is operated separately from a production environment by a hot standby method, and switching from the production environment to the disaster recovery environment is performed when a disaster occurs. In addition, a containerized database has been used to reduce the cost of system operation management.

In a prior art, a primary database system determines from a query request from a client application that the workload from the query can be shifted to a secondary database system, and instructs the client application to instruct the secondary database system to execute the query. There is also a technique in which a token and a unique sequence number are assigned in response to each write operation at a main office, the token and update data are transmitted to a remote office, and the sequence number is used to establish the sequence and define gaps in the sequence to identify missing update data.

Patent Document 1: Japanese Laid-Open Patent Publication No. 2018-088235
Patent Document 2: Japanese Laid-Open Patent Publication No. H6-290125

DISCLOSURE OF INVENTION

PROBLEM TO BE SOLVED BY THE INVENTION

However, in the related art, it is difficult to appropriately manage parameter information related to management of a container including a database that is referred to by a managing unit (for example, an autonomous managing system) that manages a container deployed in each environment such as a production environment or a disaster recovery environment.

An object of the present invention is to appropriately manage parameter information related to management of a container including a database.

MEANS FOR SOLVING PROBLEM

According to one embodiment, a managing device includes a controller configured to: among a first environment and a second environment that are redundant, detect, under the first environment, a change in first management parameter information related to management of a first container that includes a first database, the first management parameter information being referred to by a first managing unit that manages a plurality of containers deployed in the first environment, including the first container; in response to detection of the change, update first control parameter information according to the change and write contents of the change into first change history information provided in the first database, the first control parameter information being included in the first container, related to control of the first container, and referred to by the first container; detect, under the second environment, a change in second change history information in a second database included in a second container deployed in the second environment and synchronized with the first container by a data synchronization function; and update, in response to detection of the change in the second change history information in the second database included in the second container, second management parameter information related to management of the second container and referred to by a second managing unit that manages a plurality of containers deployed in the second environment, including the second container.

EFFECT OF THE INVENTION

According to one aspect of the present invention, an effect is achieved in that parameter information related to management of a container including a database can be suitably managed.

BRIEF DESCRIPTION OF DRAWINGS

Fig. 1 is an explanatory diagram depicting an example of a managing method according to an embodiment.
Fig. 2 is an explanatory diagram depicting an example of a system configuration of an information processing system 200.
Fig. 3 is a block diagram depicting an example of a hardware configuration of an information processing device 201 and the like.
Fig. 4 is a block diagram depicting an example of a functional configuration of the information processing device 201 of a production environment E1.
Fig. 5 is a block diagram depicting an example of a functional configuration of an information processing device 202 of a disaster recovery environment E2.
Fig. 6 is an explanatory diagram depicting an operation example of the information processing system 200.
Fig. 7 is an explanatory diagram depicting an example of transaction processing associated with a change in a parameter file PF.
Fig. 8 is a sequence diagram depicting an operation example in the production environment E1.
Fig. 9 is a sequence diagram depicting an operation example in the disaster recovery environment E2.
Fig. 10 is an explanatory diagram depicting an example of storage contents of a parameter table T1.
Fig. 11 is an explanatory diagram depicting an example of updating the parameter table T1.
Fig. 12 is a flowchart depicting an example of a procedure of a DB container deployment process of the information processing device 201 of the production environment E1.
Fig. 13 is a flowchart depicting an example of a procedure of a managing process of the information processing device 201 of the production environment E1.
Fig. 14 is a flowchart depicting an example of a procedure of a managing process of the information processing device 202 of the disaster recovery environment E2.
Fig. 15 is a flowchart depicting an example of a procedure of a promoting process of the information processing device 202 of the disaster recovery environment E2.
Fig. 16 is an explanatory diagram depicting an example of deployment of containers in each environment.
Fig. 17 is an explanatory diagram depicting a specific example of the parameter file PF.

BEST MODE(S) FOR CARRYING OUT THE INVENTION

Embodiments of a managing device, a managing method, and a managing program according to the present invention will be explained below in detail with reference to the accompanying drawings.

(Embodiment)

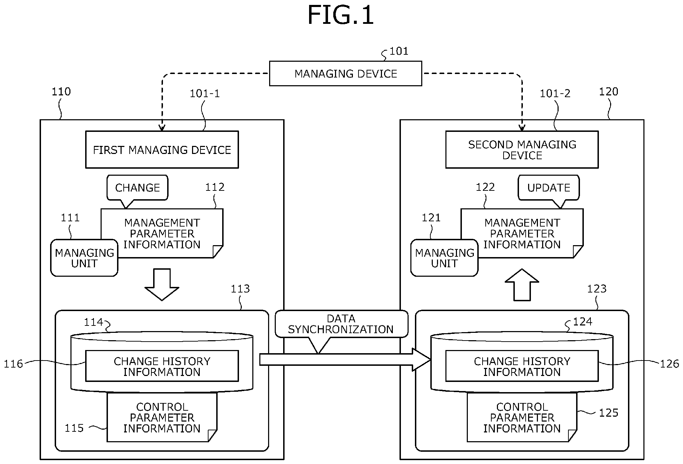

Fig. 1 is an explanatory diagram depicting an example of a managing method according to an embodiment. In Fig. 1, a managing device 101 is a computer for managing containers. A container corresponds to a user space that is created by internally dividing a kernel of an operating system (OS) and is isolated from others, and operates as one of processes of the OS.

For example, a container is a package of an application, middle-ware, a library, and the like. Each container is controlled based on, for example, a parameter file. Since general application containers operate independently of each other, even when a container goes down during execution of a process, the same process can be executed according to the parameter file.

On the other hand, not only an application but also a database (DB) may be containerized. Since a DB container (database container) has data unlike the container of the application, the DB container has to be continuously operated. For this reason, control such as synchronization of data in multiple DB containers is performed, for example, a database is deployed in a redundant configuration.

Conventionally, there is a container orchestration tool for automatically performing management such as deployment and scaling of containers in order to reduce the cost necessary for operation management of containers. Examples of the container orchestration tool include Kubernetes (k8s). Kubernetes is a registered trademark.

There is also a technique (autonomous managing system) for creating, changing, and deleting a parameter file of each container based on a parameter file for centrally managing settings of a business system when the business system or the like is built in a k8s environment. The parameter file includes, for example, container configuration information and database setting values (for example, authentication information such as a password). Further, there is a case where an autonomous managing system autonomously determines an optimum parameter according to an operation status of a business system and reflects the parameter in a container.

Here, in order to continue business even when an unexpected situation such as a natural disaster or a human-made disaster occurs, it is important to take measures against disasters in a business system. For example, it is conceivable to operate a disaster recovery environment (disaster countermeasure environment) separately from the production environment by a hot standby method and continue business by switching from the production environment to the disaster recovery environment when a disaster occurs.

On the other hand, in a business system using a container including a database, in order to perform the same business as that in the production environment when a disaster occurs, it is necessary to have the same parameter file and data in the production environment and the disaster recovery environment. For example, in the database body, data synchronization is performed by a method such as streaming replication.

Streaming replication is a technique for synchronizing data in real time. In streaming replication, for example, not only database data but also parameter information reflected in the database is synchronized. For example, by transferring the update information of the database in the production environment to the disaster recovery environment in real time, the databases in the production environment and the disaster recovery environment can be kept in the same state as each other.

In a business system in a k8s environment, an autonomous managing system manages containers based on parameter files. Therefore, it is conceivable to create a backup of a parameter file referred to by the autonomous managing system in the production environment and restore the backup to the disaster recovery environment, thereby retaining the same parameter file as that in the production environment on the disaster recovery environment side.

As an existing technique for retaining the same parameter file as that in the production environment on the disaster recovery environment side, for example, there is a backup/restore tool that periodically backs up and restores the entire k8s environment. In addition, there is an integrated management tool that integrally manages parameter files and applies the parameter files to both the production environment and the disaster recovery environment.

However, in the related arts, it is difficult to appropriately manage a parameter file related to management of a container (DB container) including a database that is referred to by an autonomous managing system. For example, depending on the backup timing, a gap may occur between the parameter file used by the disaster environment autonomous managing system and the parameter information reflected in the DB container.

The parameter information of the DB container is synchronized from the production environment to the disaster recovery environment in real time by streaming replication. However, in the existing backup/restore tool, the parameter file used by the autonomous managing system is backed up at a timing designated by the user and restored to the disaster recovery environment.

For this reason, if the production environment fails before the backup of the parameter file used by the autonomous managing system of the production environment is performed, a deviation of the parameter information may occur in the disaster recovery environment. For example, in a disaster recovery environment, while parameter information in a DB container is updated by streaming replication, a parameter file used by an autonomous managing system may not be updated and a deviation may occur.

In this case, even when the production environment is switched to the disaster recovery environment when a disaster occurs, the operation and management of the container cannot be performed by the autonomous managing system. For example, if the password of the database is not transmitted to the parameter file of the autonomous managing system, the autonomous managing system cannot connect to the database after switching from the production environment to the disaster recovery environment, and the operation and management of the database cannot be performed.

In order to prevent such a deviation by the existing techniques, it is necessary to create a backup immediately after the parameter information is changed in the production environment. However, the change of the parameter information in the production environment may be performed not only manually by a system administrator or the like but also autonomously by an autonomous managing system.

Therefore, the system administrator monitors not only the manual change of the parameter information but also the change of the parameter information by the autonomous managing system, and manually creates the backup. However, since the change by the autonomous managing system is irregularly performed according to the operation status of the business system or the like, it is difficult to grasp the execution timing of the backup.

As described above, when the system administrator or the like manually creates a backup, the operation management becomes complicated, and there is a risk of a human error such as erroneous input of a command. In addition, in the existing centralized management tool, it is not assumed that parameter information that is autonomously changed in the production environment is pulled and pushed to the disaster recovery environment (there is a restriction on the direction of information).

Therefore, in the present embodiment, a managing method for appropriately managing parameter information related to management of a container (DB container) including a database is described. Here, a processing example of the managing device 101 will be described. The managing device 101 is disposed in each of a first environment 110 and a second environment 120 that are made redundant. The first environment 110 is, for example, a production environment.

The second environment 120 is an anti-disaster environment.

Here, the managing device 101 disposed in the first environment 110 is referred to as a "first managing device 101-1", and the managing device 101 disposed in the second environment 120 is referred to as a "second managing device 101-2".

Under the first environment 110, the first managing device 101-1 detects a change in management parameter information 112 referred to by a managing unit 111. The managing unit 111 manages containers deployed in the first environment 110. The managing unit 111 corresponds to, for example, an autonomous managing system. The management parameter information 112 is information related to management of a first container 113. The first container 113 is a container (DB container) deployed in the first environment 110 and includes a database 114.

The management parameter information 112 includes, for example, configuration information of the first container 113 and values of parameters set in the database 114 included in the first container 113. The configuration information of the first container 113 is, for example, specifications of a CPU (Central Processing Unit) and a memory of the first container 113.

The parameter set in the database 114 is, for example, a password for connecting to the database 114. For example, the management parameter information 112 is manually changed by a system administrator or the like, or is changed by the managing unit 111 according to the operation status of the business system.

In response to detection of a change in the management parameter information 112, the first managing device 101-1 updates control parameter information 115 included in the first container 113 according to the change, and writes the content of the change in change history information 116 provided in the database 114.

The control parameter information 115 is information related to control of the first container 113 and is referred to by the first container 113. The control parameter information 115 includes, for example, configuration information of the first container 113 and values of parameters set in the database 114 included in the first container 113.

The first container 113 is controlled based on the control parameter information 115. In the first environment 110, when there is a difference in information related to the first container 113 between the management parameter information 112 referred to by the managing unit 111 and the control parameter information 115 in the first container 113, the managing unit 111 cannot appropriately operate and manage the first container 113.

Therefore, when the management parameter information 112 is changed, the first managing device 101-1 updates the control parameter information 115 in the first container 113 according to the change. Further, the first managing device 101-1 writes the content of the change of the management parameter information 112 in the change history information 116 in the database 114.

In the second environment 120, the second managing device 101-2 detects a change in the change history information 126 in the database 124 included in the second container 123. Here, the second container 123 is a container (DB container) deployed in the second environment 120 and synchronized with the first container 113 by a data synchronization function.

The data synchronization function is, for example, streaming replication. According to streaming replication, data synchronization is performed in real time between the first container 113 (synchronization source) in the first environment 110 and the second container 123 (synchronization destination) in the second environment 120.

As a result, the control parameter information 125 and the change history information 126 in the second container 123 are updated. The control parameter information 125 is information related to control of the second container 123 and referred to by the second container 123, and is information corresponding to the control parameter information 115 of the first container 113. The change history information 126 is information corresponding to the change history information 116 of the first container 113.

In response to detection of a change in the change history information 126, the second managing device 101-2 updates according to the change, the management parameter information 122 referred to by the managing unit 121. The managing unit 121 manages containers deployed in the second environment 120. The managing unit 121 corresponds to, for example, an autonomous managing system. The management parameter information 122 is information related to management of the second container 123, and is information corresponding to the management parameter information 112 of the first environment 110.

As described, the second managing device 101-2 can detect a change in the parameter information (the management parameter information 112 and the control parameter information 115) in the first environment 110 from the change history information 126 and update the management parameter information 122 in the second environment 120 by utilizing a data synchronization function (for example, streaming replication).

Accordingly, the managing device 101 (the first managing device 101-1 and the second managing device 101-2) can appropriately manage the parameter information related to the management of the DB containers (the first container 113 and the second container 123). For example, in the second environment 120, the managing device 101 can prevent a deviation from occurring between the control parameter information 125 in the second container 123 and the management parameter information 122 referred to by the managing unit 121.

As a result, in the management device 101, when the configuration of the first environment 110 (for example, the production environment) is changed, a system administrator or the like does not need to manually change the configuration of the second environment 120 (for example, the disaster recovery environment), and it is possible to reduce costs and human errors (operation errors) related to operation management.

In addition, the managing device 101 can appropriately perform operation management of the database 124 in the second container 123 when the first environment 110 is switched to the second environment 120 when a disaster or the like occurs. For example, the managing device 101 can avoid a situation in which the managing unit 121 cannot connect to the database 124 and cannot perform operation management, which occurs when authentication information such as a password is not transmitted to the managing unit 121.

(Example of System Configuration of Information Processing System 200)

Next, an example of a system configuration of the information processing system 200 including the managing device 101 depicted in Fig. 1 will be described. Here, a case where the managing device 101 depicted in Fig. 1 is applied to information processing devices 201 and 202 in the information processing system 200 will be described as an example.

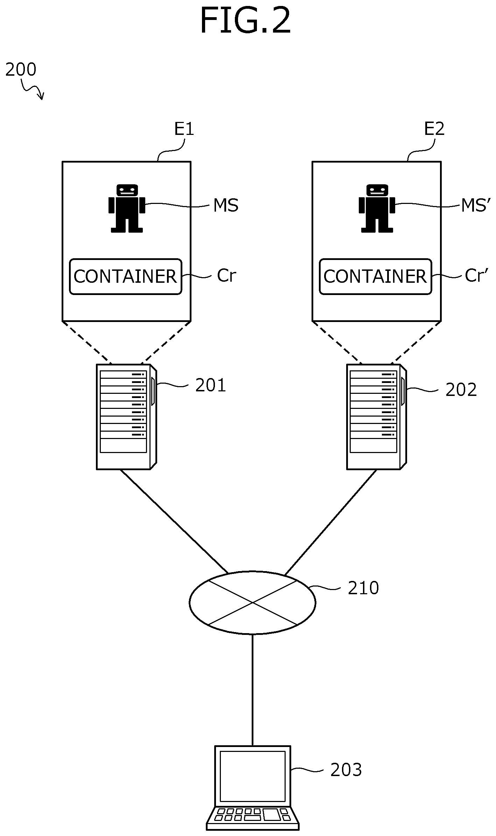

Fig. 2 is an explanatory diagram depicting an example of a system configuration of the information processing system 200. In Fig. 2, the information processing system 200 includes the information processing device 201, the information processing device 202, and an administrator terminal 203. In the information processing system 200, the information processing device 201, the information processing device 202, and the administrator terminal 203 are couple to each other via a wired or wireless network 210. The network 210 is, for example, the Internet, a local area network (LAN), a wide area network (WAN), or the like.

Here, the information processing device 201 is a computer in a production environment E1. The production environment E1 is an environment in which a system actually used by a user operates. The system is, for example, a business system. The first managing device 101-1 depicted in Fig. 1 corresponds to, for example, the information processing device 201. The first environment 110 depicted in Fig. 1 corresponds to, for example, the production environment E1.

The information processing device 201 can execute one or more containers Cr. A container Cr is, for example, a DB container or an application container. A DB container is a container including a database. An application container is a container that does not include a database.

The information processing device 201 can execute an autonomous managing system MS. The autonomous managing system MS is software that manages the containers Cr deployed in the production environment E1. The information processing device 201 is realized by, for example, one or more servers.

The information processing device 202 is a computer of the disaster recovery environment E2. The production environment E1 and the disaster recovery environment E2 are made redundant for disaster countermeasures. The disaster recovery environment E2 is a standby system synchronized with the production environment E1 (active system). The disaster recovery environment E2 operates so as to be immediately switchable from the production environment E1 when a disaster occurs. The second managing device 101-2 depicted in Fig. 1 corresponds to, for example, the information processing device 202. The second environment 120 depicted in Fig. 1 corresponds to, for example, the disaster recovery environment E2.

The information processing device 202 can execute one or more containers Cr'. A container Cr' corresponds to a container Cr of the production environment E1. The information processing device 202 can execute an autonomous managing system MS'. The autonomous managing system MS' is software that manages the containers Cr' deployed in the disaster recovery environment E2. The information processing device 202 is realized by, for example, one or more servers.

The administrator terminal 203 is a computer used by a system administrator of the information processing system 200. The administrator terminal 203 is, for example, a personal computer (PC), a tablet PC, or the like.

(Example of Hardware Configuration of Information processing device 201 and the like)

Next, an example of a hardware configuration of the information processing devices 201 and 202 will be described. Here, the information processing devices 201 and 202 are referred to as "information processing device 201, etc.".

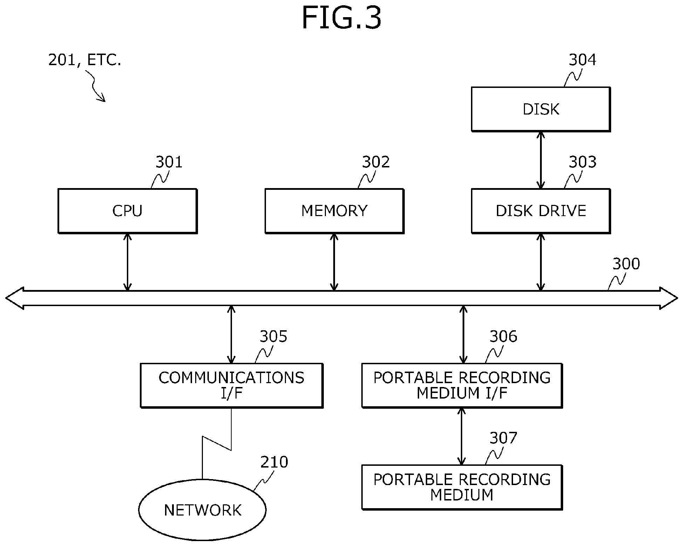

Fig. 3 is a block diagram depicting an example of a hardware configuration of the information processing device 201 and the like. In Fig. 3, the information processing device 201, and the like each includes a CPU 301, a memory 302, a disk drive 303, a disk 304, a communications interface (I/F) 305, a portable recording medium I/F 306, and a portable recording medium 307. The components are coupled to each other via a bus 300.

Here, the CPU 301 governs overall control of the information processing device 201 and the like. The CPU 301 may include a plurality of cores. The memory 302 includes, for example, a read only memory (ROM), a random access memory (RAM), and a flash ROM. Specifically, for example, the flash ROM stores an OS program, the ROM stores an application program, and the RAM is used as a work area of the CPU 301. A program stored in the memory 302 is loaded onto the CPU 301 and causes the CPU 301 to execute an encoded process.

The disk drive 303 controls the reading and writing of data with respect to the disk 304, under the control of the CPU 301. The disk 304 stores data written thereto under the control of the disk drive 303. The disk 304 is, for example, a magnetic disk, an optical disk, or the like.

The communications I/F 305 is connected to the network 210 via a communication line, and is connected to an external computer via the network 210. The communications I/F 305 serves as an interface between the network 210 and the inside of the device, and controls input and output of data with respect to an external computer. The communications I/F 305 is, for example, a modem or a LAN adapter.

The portable recording medium I/F 306 controls the reading an writing of data with respect to the portable recording medium 307, under the control of the CPU 301. The portable recording medium 307 stores data thereto written under the control of the portable recording medium I/F 306. The portable recording medium 307 is, for example, a compact disc (CD)-ROM, a digital versatile disk (DVD), a universal serial bus (USB) memory, or the like.

Note that the information processing device 201 and the like may include, for example, an input device, a display, and the like in addition to the above-described components. The information processing device 201 and the like may omit, for example, the portable recording medium I/F 306 and the portable recording medium 307 among the above-described components. The administrator terminal 203 depicted in Fig. 2 can also be implemented by a hardware configuration similar to that of the information processing device 201 and the like. However, the administrator terminal 203 includes, for example, an input device, a display, and the like in addition to the above-described components.

(Functional Configuration Example of Information processing device 201)

Next, an example of a functional configuration of the information processing device 201 of the production environment E1 will be described.

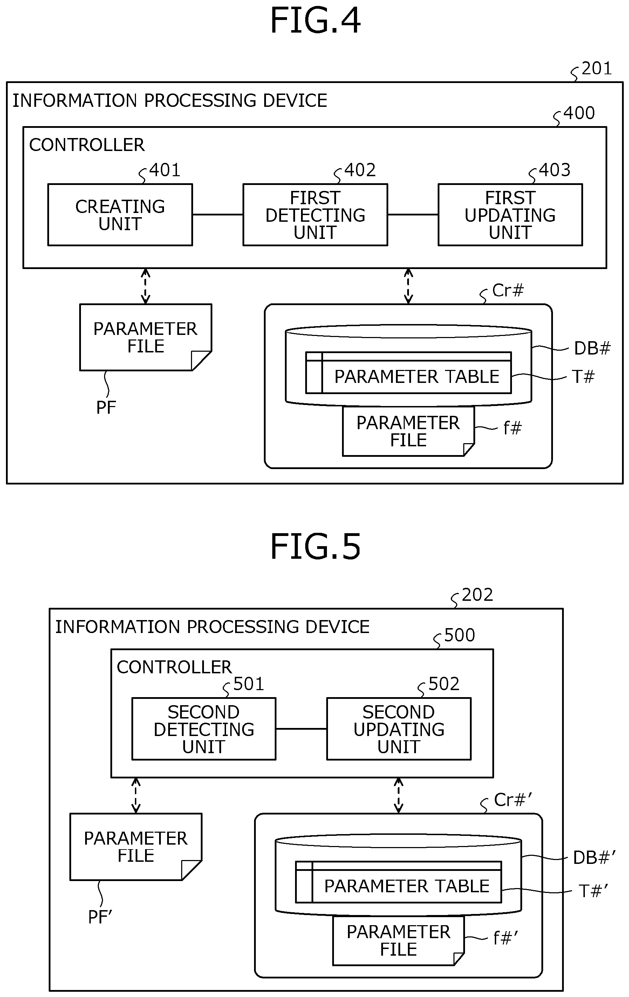

Fig. 4 is a block diagram depicting an example of a functional configuration of the information processing device 201 of the production environment E1. In Fig. 4, the information processing device 201 includes a creating unit 401, a first detecting unit 402, and a first updating unit 403. The creating unit 401 to the first updating unit 403 are functions serving as the controller 400. Specifically, for example, the functions are realized by causing the CPU 301 to execute a program stored in a storage device such as the memory 302, the disk 304, or the portable recording medium 307 of the information processing device 201 depicted in Fig. 3 or by the communications I/F 305. The processing results of the functional units are stored to, for example, a storage device such as the memory 302 or the disk 304. More specifically, for example, each functional unit may be realized by the autonomous managing system MS depicted in Fig. 2.

In the following description, an arbitrary DB container among the containers Cr in the production environment E1 may be referred to as a "DB container Cr#". A database included in the DB container Cr# may be referred to as a "database DB#". Among the containers Cr' in the disaster recovery environment E2, a DB container corresponding to the DB container Cr# in the production environment E1 may be referred to as a "DB container Cr#'".

The DB container Cr# of the production environment E1 is synchronized with the DB container Cr#' of the disaster recovery environment E2 by the data synchronization function. However, the DB container Cr# is a synchronization source, and the DB container Cr# is a synchronization destination. The data synchronization function is, for example, streaming replication.

According to streaming replication, for example, by transferring update information of the DB container Cr# to the DB container Cr#' in real time, the databases of the DB container Cr# and the DB container Cr#' can be maintained in the same state as each other. For example, the update information of the DB container Cr# is stored as WAL (Write-Ahead Log, transaction log). In the streaming replication, the WAL is transferred to the DB container Cr#' in real time, and the WAL is applied in the DB container Cr#'.

When the DB container Cr# is deployed in the production environment E1, the creating unit 401 creates a parameter table T# in the database DB# included in the DB container Cr#. The parameter table T# stores change contents of parameter information related to management of the container Cr deployed in the production environment E1. The change history information 116 depicted in Fig. 1 corresponds to, for example, the parameter table T#.

The parameter information includes, for example, configuration information of the DB container Cr# and values of parameters set in the database DB# included in the DB container Cr#. The configuration information of the DB container Cr# represents, for example, specifications of a CPU and a memory of the DB container Cr#. The parameters set in the database DB# are, for example, a password and specifications of the database DB#. The parameter information initially registered in the parameter table T# is designated by, for example, a system administrator.

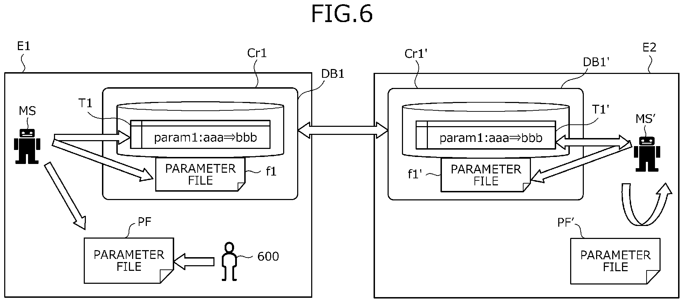

For example, it is assumed that a DB container Cr1 as depicted in Fig. 6 to be described later is deployed in the production environment E1. In this case, the creating unit 401 creates a parameter table T1 in a database DB1 included in the DB container Cr1. More specifically, for example, the creating unit 401 creates the parameter table T1 using the following CREATE TABLE statement.

CREATE TABLE statement=create table update_parameter (param_name text, param_value_text, create_at timestamp, param_value_updated_text, update_at timestamp);

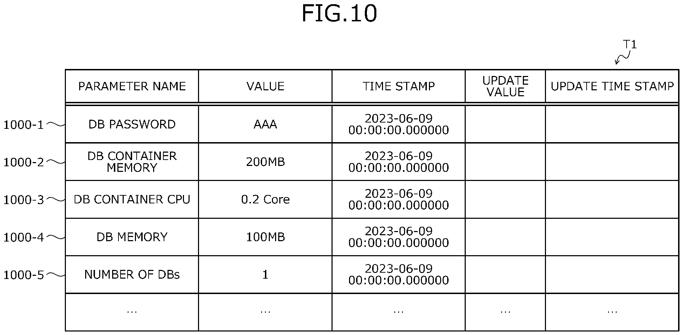

The contents stored in the parameter table T1 will be described later with reference to Fig. 10. The "param _name text" corresponds to a "parameter name" depicted in Fig. 10 described later. The "param _value_text" corresponds to the "value" depicted in Fig. 10. The "create_at timestamp" corresponds to the "timestamp" depicted in Fig. 10. The "param_value_updated_text" corresponds to the "update value" depicted in Fig. 10. The "update_at timestamp" corresponds to the "update timestamp" depicted in Fig. 10.

The first detecting unit 402 detects a change in a parameter file PF referred to by the autonomous managing system MS. Here, the autonomous managing system MS is a managing unit that manages the containers Cr deployed in the production environment E1 (see Fig. 2). The parameter file PF is parameter information (management parameter information) related to management of the container Cr deployed in the production environment E1.

For example, the parameter file PF includes parameter information related to the management of the DB container Cr# deployed in the production environment E1. The parameter file PF includes parameter information related to the management of an application container deployed in the production environment E1. The parameter file PF is changed by the system administrator using, for example, the administrator terminal 203 depicted in Fig. 2. Further, the parameter file PF may be autonomously changed by the autonomous managing system MS, for example, according to the operation status of the business system operating in the production environment E1.

Specifically, for example, the first detecting unit 402 periodically checks the content of the parameter file PF at regular time intervals. A certain period of time can be arbitrarily set, and may be set to, for example, about several seconds. Then, the first detecting unit 402 compares the latest storage content of the parameter file PF with the immediately preceding storage content.

Here, when there is a difference between the latest storage content and the immediately preceding storage content, the first detecting unit 402 detects a change in the parameter file PF. On the other hand, when there is no difference between the latest storage content and the immediately preceding storage content, the first detecting unit 402 does not detect a change in the parameter file PF.

The first detecting unit 402 may detect a change in the parameter file PF by detecting a change process performed on the parameter file PF by the system administrator using the administrator terminal 203. The first detecting unit 402 may detect a change in the parameter file PF by detecting an autonomous change process performed on the parameter file PF by the autonomous managing system MS.

In response to detection of a change in the parameter file PF, the first updating unit 403 updates the parameter file f# included in the DB container Cr# according to the change, and writes the content of the change in the parameter table T# provided in the database DB#. Here, the parameter file f# is information (control parameter information) related to the control of the DB container Cr# and is referred to by the DB container Cr#.

The parameter file f# includes, for example, configuration information of the DB container Cr#, values of parameters set in the database DB# included in the DB container Cr#, and the like. The DB container Cr# is controlled based on the parameter file f#. More specifically, for example, the first updating unit 403 performs writing to the parameter table T# using the following INSERT statement.

INSERT statement=INSERT into update_parameter (update value, update timestamp) VALUES (update value, update time);

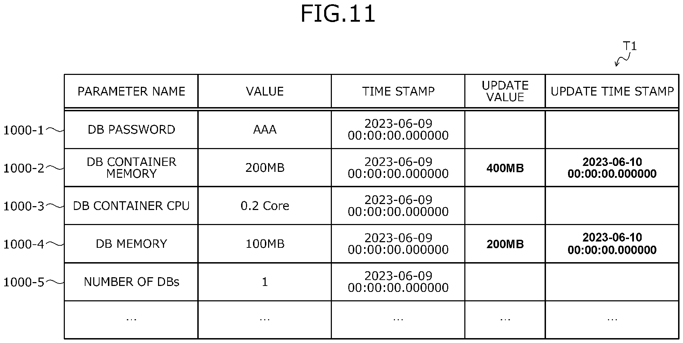

An example of updating the parameter table T1 will be described later with reference to Fig. 11.

When writing the content of the detected change in the parameter file PF to the parameter table T#, the first updating unit 403 may not write the content of the change to the parameter table T# when the update of the parameter file f# according to the change fails.

Specifically, for example, in response to detection of a change in the parameter file PF, the first updating unit 403 obtains changed parameter information from the parameter file PF. Then, the first updating unit 403 performs a process of updating the parameter file f# in the DB container Cr# and a process of writing to the parameter table T# in the database DB# in one transaction using the changed parameter information.

Thus, when the update of the parameter file f# fails, the changed content of the parameter file PF is not written in the parameter table T#. Similarly, when the writing of the changed content of the parameter file PF to the parameter table T# fails, the parameter file f# is not updated.

In addition, in response to detection of a change in the parameter file PF, the first updating unit 403 may further update a parameter file included in another container different from the DB container Cr# among the containers Cr deployed in the production environment E1 according to the change. The other container is, for example, an application container that does not include a database.

The parameter file included in the other container is information (control parameter information) related to control of the other container and is referred to by the other container. As a result, the first updating unit 403 reflects the changed content of the parameter file PF in the parameter files of other containers (for example, application containers).

In the disaster recovery environment E2, in response to detection of a change in the parameter table T#' in the database DB#' included in the DB container Cr#' synchronized with the DB container Cr# by the data synchronization function, the parameter file PF' referred to by the autonomous managing system MS' is updated according to the change.

(Example of Functional Configuration of Information processing device 202)

Next, an example of a functional configuration of the information processing device 202 of the disaster recovery environment E2 will be described.

Fig. 5 is a block diagram depicting an example of a functional configuration of the information processing device 202 of the disaster recovery environment E2. In Fig. 5, the information processing device 202 includes a second detecting unit 501 and a second updating unit 502. The second detecting unit 501 to the second updating unit 502 are functions serving as a controller 500. Specifically, for example, the functions are realized by causing the CPU 301 to execute a program stored in a storage device such as the memory 302, the disk 304, or the portable recording medium 307 of the information processing device 202 depicted in Fig. 3 or by the communications I/F 305. Process results of the functional units are stored to, for example, a storage device such as the memory 302 or the disk 304. More specifically, for example, the functional units may be realized by the autonomous managing system MS' depicted in Fig. 2.

The second detecting unit 501 detects a change in the parameter table T#' in the database DB#' included in the DB container Cr#'. The DB container Cr#' is a container deployed in the disaster recovery environment E2 and synchronized with the DB container Cr# in the production environment E1 by a data synchronization function (for example, streaming replication).

The parameter table T#' is synchronized with the parameter table T# in the database DB included in the DB container Cr# of the production environment E1 by a data synchronization function (for example, streaming replication). The change history information 126 depicted in Fig. 1 corresponds to, for example, the parameter table T#'.

Specifically, for example, the second detecting unit 501 checks the content of the parameter table T#' at regular time intervals. The certain period of time can be arbitrarily set, and may be set to, for example, about several seconds. Then, the second detecting unit 501 compares the latest storage content and the immediately preceding storage content of the parameter table T#'.

Here, when there is a difference between the latest storage content and the immediately preceding storage content, the second detecting unit 501 detects a change in the parameter table T#'. On the other hand, when there is no difference between the latest storage content and the immediately preceding storage content, the second detecting unit 501 does not detect a change in the parameter table T#'.

In response to detection of a change in the parameter table T#', the second updating unit 502 updates the parameter file PF' referred to by the autonomous managing system MS' according to the change. Here, the autonomous managing system MS' is a managing unit that manages containers Cr' deployed in the disaster recovery environment E2 (see Fig. 2).

The parameter file PF' is parameter information (management parameter information) related to management of the container Cr' deployed in the disaster recovery environment E2. For example, the parameter file PF' includes parameter information related to management of the DB container Cr#' deployed in the disaster recovery environment E2. The parameter file PF' includes parameter information related to management of the application container deployed in the disaster recovery environment E2.

Specifically, for example, in response to detection of a change in the parameter table T#', the second updating unit 502 obtains the changed parameter information from the parameter table T#'. Then, the second updating unit 502 updates the parameter file PF' using the obtained changed parameter information.

At this time, for example, in order to reliably reflect the changed content of the parameter table T#' in the parameter file PF', the second updating unit 502 may recursively update the parameter file PF' by using the values of both the new and old parameters until successful.

Here, the parameter file f#' in the DB container Cr#' is synchronized with the parameter file f# in the DB container Cr# of the production environment E1 by a data synchronization function (for example, streaming replication). However, the possibility that the parameter file f#' is not synchronized with the parameter file f# due to some trouble is not zero.

Therefore, when the update of the parameter file PF' is successful, the second updating unit 502 may update the parameter file f#' in the DB container Cr#' according to the detected change of the parameter table T#'. Accordingly, the second updating unit 502 reliably prevents a deviation from occurring between the parameter file PF' referred to by the autonomous managing system MS' and the parameter file f#' in the DB container Cr#'.

When the update of the parameter file PF' is successful, the second updating unit 502 may update the parameter file included in another container different from the DB container Cr#' among the containers Cr' deployed in the disaster recovery environment E2 according to the detected change in the parameter table T#'. Accordingly, the second updating unit 502 reflects the update content of the parameter file PF' in the parameter file of another container (for example, an application container).

With consideration of a possibility that the parameter file f#' is not synchronized with the parameter file f# due to some trouble, the second updating unit 502 may determine whether a change having the same content as the parameter table T#' is reflected in the parameter file f#' before updating the parameter file PF'.

A reflection of the same change as that in the parameter table T#' indicates that the same change has been made to the same change point as that in the parameter table T#'. Here, the second updating unit 502 may update the parameter file PF' when the parameter file is reflected in the parameter file f#'. On the other hand, when the parameter file is not reflected in the parameter file f#', the second updating unit 502 may not update the parameter file PF'.

In the production environment E1, in response to detection of a change in the parameter file PF referred to by the autonomous managing system MS, the parameter file f# included in the DB container Cr# is updated according to the change, and the content of the change is written to the parameter table T# in the database DB#.

The information processing device 201 may include the functional units (the second detecting unit 501 and the second updating unit 502) of the information processing device 202 depicted in Fig. 5. When the information processing device 201 is disposed in the disaster recovery environment E2, the information processing device 201 performs processing by the functional units (the second detecting unit 501 and the second updating unit 502). The information processing device 202 may include the functional units (the creating unit 401 to the first updating unit 403) of the information processing device 201 depicted in Fig. 4. When the information processing device 202 is in the production environment E1, the information processing device 202 performs processing by the functional units (the creating unit 401 to the first updating unit 403).

(Operation Example of Information Processing System 200)

Next, an operation example of the information processing system 200 will be described. Here, it is assumed that the DB container Cr1 of the production environment E1 and the DB container Cr1' of the disaster recovery environment E2 are synchronized by streaming replication (data synchronization function). In addition, a case where the functional units of the information processing device 201 disposed in the production environment E1 is realized by the "autonomous managing system MS" and the functional units of the information processing device 202 disposed in the disaster recovery environment E2 are realized by the "autonomous managing system MS'" will be described as an example.

Fig. 6 is an explanatory diagram depicting an operation example of the information processing system 200. Fig. 6 depicts the production environment E1 and the disaster recovery environment E2 in the information processing system 200. In the production environment E1, it is assumed that the parameter file PF is changed by a system administrator 600 or the autonomous managing system MS.

In this case, the autonomous managing system MS detects a change in the parameter file PF. In response to the detection of the change in the parameter file PF, the autonomous managing system MS updates the parameter file f1 included in the DB container Cr1 according to the change, and writes the content of the change in the parameter table T1 provided in the database DB1.

For example, it is assumed that the setting value of the parameter "param1" of the main body of the database DB1 is changed from "aaa" to "bbb" in the parameter file PF. In this case, the autonomous managing system MS changes the value of "param1" in the parameter file f1 included in the DB container Cr1 from "aaa" to "bbb".

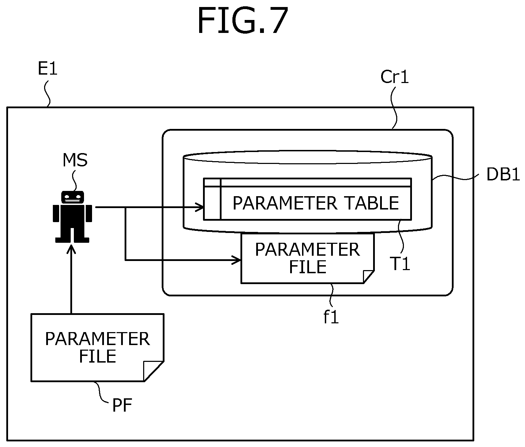

Further, the autonomous managing system MS writes that the value of "param1" has been changed from "aaa" to "bbb" in the parameter table T1 in the database DB1. At this time, for example, as depicted in Fig. 7, the autonomous managing system MS performs update processing of the parameter file f1 and write processing to the parameter table T1 in one transaction.

Fig. 7 is an explanatory diagram depicting an example of transaction processing associated with a change in the parameter file PF. In Fig. 7, when the autonomous managing system MS detects a change in the parameter file PF, the autonomous managing system MS performs a process (update process) of changing the parameter file f1 according to the change and a process (write process) of writing the content of the change in the parameter table T1 in one transaction.

At this time, the autonomous managing system MS does not change the parameter file f1 when the change content cannot be written to the parameter table T1. When the parameter file f1 cannot be changed, the autonomous managing system MS does not write the changed content to the parameter table T1.

As a result, the autonomous managing system MS can prevent a difference in change points between the parameter file f1 and the parameter table T1.

Here, description continues with reference to Fig. 6. When the parameter file f1 is updated and written to the parameter table T1 according to the change of the parameter file PF, information is propagated from the production environment E1 to the disaster recovery environment E2 by streaming replication, and the DB container Cr1 of the production environment E1 and the DB container Cr1' of the disaster recovery environment E2 are synchronized.

As a result, in the disaster recovery environment E2, the autonomous managing system MS' detects a change in the parameter table T1' in the database DB1' included in the DB container Cr1'. In response to detection of a change in the parameter table T1', the autonomous managing system MS' updates the parameter file PF' according to the change.

For example, the autonomous managing system MS' obtains the changed parameter information from the parameter table T1'. Here, parameter information indicating that the value of "param1" has been changed from "aaa" to "bbb" is obtained from the parameter table T1'. Then, the autonomous managing system MS' changes the value of "param1" in the parameter file PF' from "aaa" to "bbb".

The autonomous managing system MS' may update the value of "param1" in the parameter file f1' of the DB container Cr1' to "bbb". However, when the streaming replication is normally performed between the DB container Cr1 of the production environment E1 and the DB container Cr1' of the disaster recovery environment E2, the value of "param1" in the parameter file f1' has already been changed to "bbb".

As a result, the autonomous managing system MS' can eliminate a difference between the parameter file PF' used thereby and the parameter file f1' in the DB container Cr1' and reflect a change to the parameter file PF in the production environment E1 in the parameter file PF' in the disaster recovery environment E2.

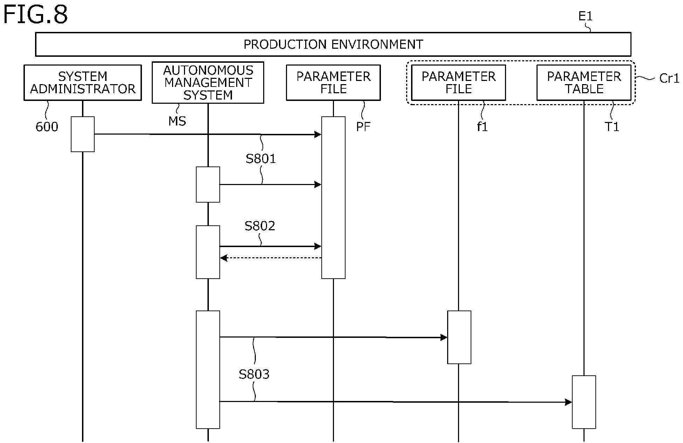

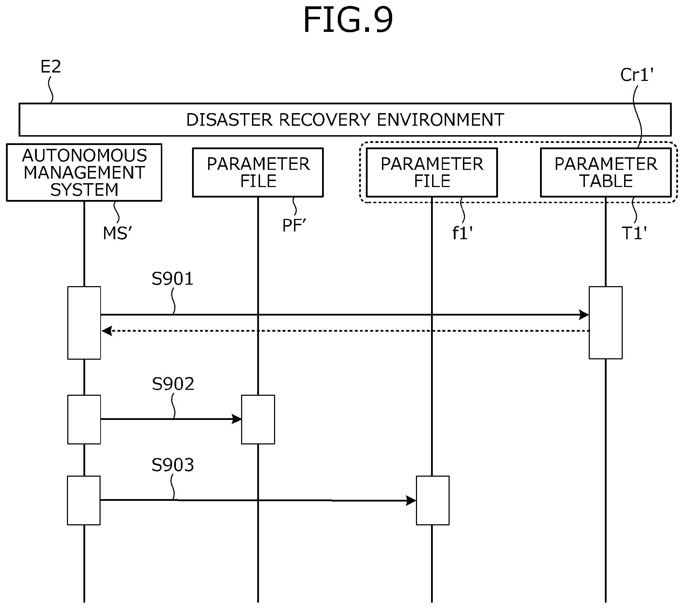

Here, an operation example in each environment (the production environment E1 and the disaster recovery environment E2) will be described with reference to sequence diagrams of Figs. 8 and 9. Here, a case where the system administrator 600 changes the parameter file PF referred to by the autonomous managing system MS will be described as an example.

Fig. 8 is a sequence diagram depicting an operation example in the production environment E1. In the sequence diagram depicted in Fig. 8, first, the system administrator 600 changes the parameter file PF using the administrator terminal 203 (see Fig. 2) (step S801).

The autonomous managing system MS detects a change in the parameter file PF (step S802). At this time, the autonomous managing system MS obtains the changed parameter information from the parameter file PF. Then, the autonomous managing system MS updates the parameter file f1 of the DB container Cr1 using the changed parameter information, and writes the changed content to the parameter table T1 of the DB container Cr1 (step S803).

Thereafter, information is propagated from the production environment E1 to the disaster recovery environment E2 by the data synchronization function (streaming replication), and the DB container Cr1 of the production environment E1 and the DB container Cr1' of the disaster recovery environment E2 are synchronized.

Fig. 9 is a sequence diagram depicting an operation example in the disaster recovery environment E2. In the sequence diagram depicted in Fig. 9, the autonomous managing system MS' detects a change in the parameter table T1' of the DB container Cr1' (step S901). At this time, the autonomous managing system MS' obtains the changed parameter information from the parameter table T1'.

Then, the autonomous managing system MS' updates the parameter file PF' using the changed parameter information (step S902). When the update of the parameter file PF' is successful, the autonomous managing system MS' updates the parameter file f1' of the DB container Cr1' using the changed parameter information (step S903).

Thus, the system administrator 600 can automatically make the production environment E1 and the disaster recovery environment E2 have the same configuration by merely changing the parameter file PF used by the autonomous managing system MS of the production environment E1. Therefore, the system administrator 600 does not need to manually change the configuration in the disaster prevention environment E2 when changing the configuration of the production environment E1, and it is possible to reduce costs related to human errors (operation mistakes) and operation management.

(Storage Content of Parameter Table T #)

Next, storage contents of the parameter table T# will be described with reference to Fig. 10. Here, the parameter table T1 provided in the database DB1 included in the DB container Cr1 depicted in Fig. 6 will be described as an example.

Fig. 10 is an explanatory diagram depicting an example of storage contents of the parameter table T1. In Fig. 10, the parameter table T1 has fields of a parameter name, a value, a time stamp, an update value, and an update time stamp, and stores change history information (for example, change history information 1000-1 to 1000-5) as a record by setting information in each field.

Here, the parameter name is a name of a parameter related to management of the container Cr deployed in the production environment E1. The parameters include, for example, configuration information of the DB container Cr1 (a memory of the DB container, a CPU of the DB container, and the like) and parameters set in the database DB1 included in the DB container Cr1 (a password of the DB, a memory of the DB, and the like). The value is a value of a parameter.

The time stamp indicates the date and time when the parameter is initially registered in the parameter table T1. For example, the parameter table T1 is created when the DB container Cr1 is deployed in the production environment E1. In this case, the time stamp is the date and time when the DB container Cr1 is deployed.

However, when a parameter is newly added after deployment of the DB container Cr1, the time stamp of the parameter may be, for example, the date and time when the parameter is newly added. The update value is the value of the updated parameter. The update time stamp indicates the date and time when the value of the parameter is updated.

The parameter table T1 is replicated by the data synchronization function (streaming replication) and stored to the database DB1' of the DB container Cr1' deployed in the disaster recovery environment E2. As a result, the parameter name is the name of the parameter related to the management of the container Cr' deployed in the disaster recovery environment E2.

Next, an example of updating the parameter table T1 will be described with reference to Fig. 11.

Fig. 11 is an explanatory diagram depicting an example of updating the parameter table T1. In Fig. 11, the change history information 1000-2 and 1000-4 in the parameter table T1 are updated (bold-faced portions in Fig. 11).

In the change history information 1000-2, the update value "400 MB" and the update time stamp "2023-06-10 00:00:00.000000" are written for the parameter name "DB container memory". This writing indicates that the value of the parameter name "DB container memory" is changed to the update value "400MB" at the update time stamp "2023-06-10 00:00:00.000000".

In the change history information 1000-4, the update value "200 MB" and the update time stamp "2023-06-10 00:00:00.000000" are written for the parameter name "DB memory". This writing indicates that the value of the parameter name "DB memory" is changed to the update value "200MB" at the update time stamp "2023-06-10 00:00:00.000000".

Writing to the parameter table T1 is propagated to the parameter table T1' of the DB container Cr1' of the disaster recovery environment E2 by the data synchronization function (streaming replication). As a result, the autonomous managing system MS' of the disaster recovery environment E2 detects the change in the parameter table T1'.

(Various Processing Procedures of Information Processing Device 201 in Production Environment E1)

Next, various processing procedures of the information processing device 201 of the production environment E1 will be described. Various processes of the information processing device 201 are executed by, for example, the autonomous managing system MS of the production environment E1.

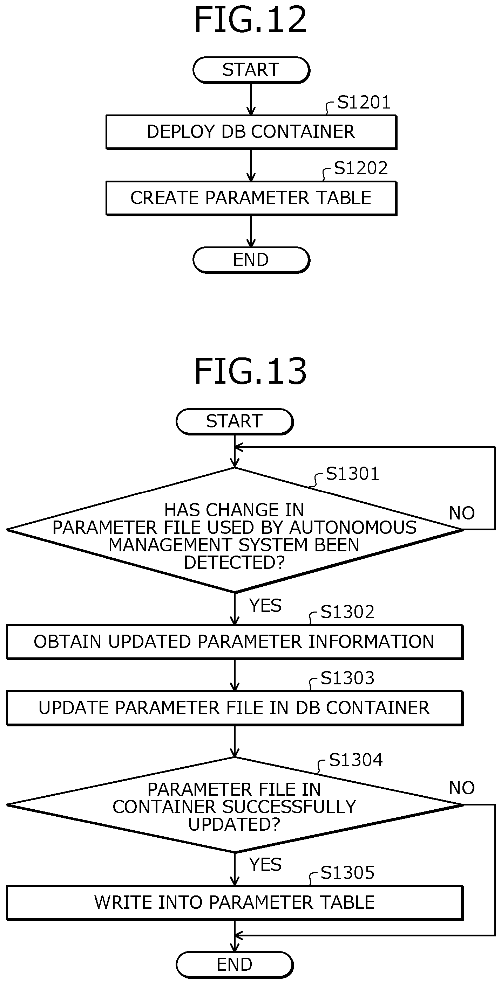

First, a procedure of a DB container deployment process of the information processing device 201 of the production environment E1 will be described with reference to Fig. 12.

Fig. 12 is a flowchart depicting an example of a procedure of the DB container deployment process of the information processing device 201 of the production environment E1. In the flowchart depicted in Fig. 12, first, the information processing device 201 deploys the DB container Cr# in the production environment E1 based on the parameter file PF (step S1201).

The parameter file PF is created by, for example, a system administrator and input to the information processing device 201 (initial setting).

Then, the information processing device 201 refers to the parameter file PF, creates the parameter table T# in the database DB# included in the DB container Cr# deployed in the production environment E1 (step S1202), and ends the series of processes according to this flowchart.

Accordingly, when the DB container Cr# is deployed in the production environment E1, the information processing device 201 can create the parameter table T# for writing the change content to the parameter file PF in the database DB# of the DB container Cr#.

Next, a procedure of a managing process of the information processing device 201 of the production environment E1 will be described with reference to Fig. 13.

Fig. 13 is a flowchart depicting an example of a procedure of the managing process of the information processing device 201 of the production environment E1. In the flowchart depicted in Fig. 13, first, the information processing device 201 determines whether a change in the parameter file PF used by the autonomous managing system MS is detected (step S1301).

Here, the information processing device 201 waits for detection of a change in the parameter file PF (step S1301: NO). When a change in the parameter file PF is detected (step S1301: YES), the information processing device 201 obtains the changed parameter information from the parameter file PF (step S1302).

Next, the information processing device 201 updates the parameter file f# in the DB container Cr# using the changed parameter information (step S1303). Then, the information processing device 201 determines whether the parameter file f# in the DB container Cr# has been successfully updated (step S1304).

Here, when the update of the parameter file f# fails (step S1304: NO), the information processing device 201 ends the series of processes according to the flowchart. On the other hand, when the update of the parameter file f# is successful (step S1304: YES), the information processing device 201 writes the changed content of the parameter file PF into the parameter table T# in the database DB# using the changed parameter information (step S1305), and ends the series of processes according to this flowchart.

Accordingly, the information processing device 201 can update the parameter file f# and write the parameter file f# to the parameter table T# in response to the change of the parameter file PF. As a result, by the data synchronization between the DB container Cr1 of the production environment E1 and the DB container Cr1' of the disaster recovery environment E2, the change of the parameter file PF in the production environment E1 is propagated to the parameter file f#' and the parameter table T1' in the DB container Cr1' of the disaster recovery environment E2.

In addition, the information processing device 201 performs writing to the parameter table T# only when the parameter file f# in the DB container Cr# is successfully updated and thus, it is possible to prevent a deviation from occurring in a change point between the parameter file f1# and the parameter table T#.

When the update of the parameter file f# fails at step S1304, the information processing device 201 may execute an error process. In the error process, for example, an error notification indicating that the parameter file f# in the DB container Cr# cannot be updated is transmitted to the administrator terminal 203 in response to the change of the parameter file PF. As a result, the system administrator can take some measures to eliminate the difference between the parameter file PF in the production environment E1 and the parameter file f# in the DB container Cr#. At step S1305, the information processing device 201 may also execute error processing when writing to the parameter table T# fails.

(Various Processing Procedures of Information processing device 202 in Disaster Action Environment E2)

Next, various processing procedures of the information processing device 202 of the disaster recovery environment E2 will be described. Various processes of the information processing device 202 are executed by, for example, the autonomous managing system MS' of the disaster recovery environment E2.

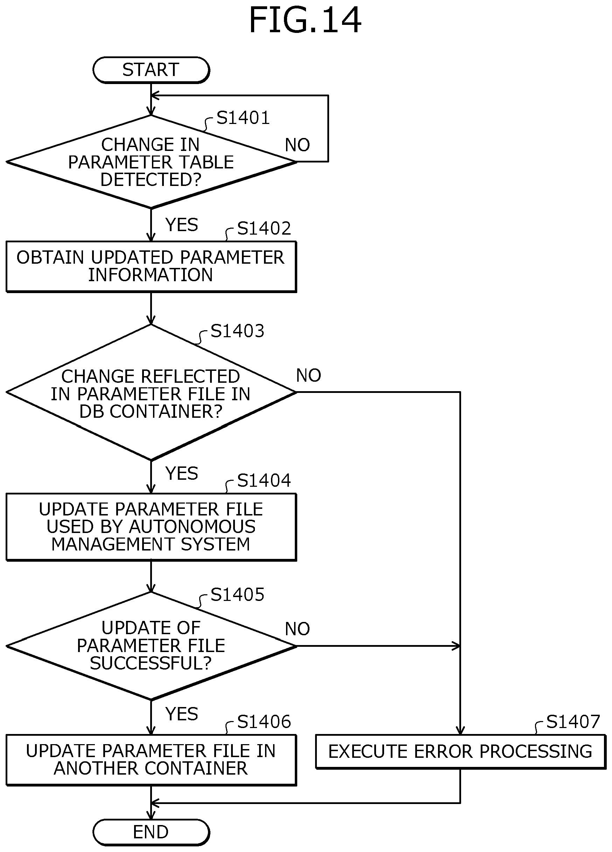

First, a procedure of a managing process of the information processing device 202 of the disaster recovery environment E2 will be described with reference to Fig. 14.

Fig. 14 is a flowchart depicting an example of a procedure of the managing process of the information processing device 202 of the disaster recovery environment E2. In the flowchart depicted in Fig. 14, first, the information processing device 202 determines whether a change in the parameter table T#' in the database DB#' included in the DB container Cr#' has been detected (step S1401).

Here, the information processing device 202 waits for detection of a change in the parameter table T#' (step S1401: NO). When the information processing device 202 detects a change in the parameter table T#' (step S1401: YES), the information processing device 202 obtains the changed parameter information from the parameter table T#' (step S1402).

Next, the information processing device 202 refers to the changed parameter information and determines whether a change having the same content as that of the parameter table T#' is reflected in the parameter file f#' in the DB container Cr#' (step S1403). Here, when the parameter information is reflected in the parameter file f#' (step S1403: YES), the information processing device 202 updates the parameter file PF' used by the autonomous managing system MS' using the changed parameter information (step S1404).

Then, the information processing device 202 determines whether the update of the parameter file PF' is successful (step S1405). Here, when the update of the parameter file PF' is successful (step S1405: YES), the information processing device 202 updates the parameter file in another container of the disaster recovery environment E2 using the changed parameter information (step S1406), and ends the series of processes according to the flowchart.

In addition, at step S1403, when the information is not reflected in the parameter file f#' (step S1403: NO), the information processing device 202 executes an error process (step S1407), and ends a series of processes according to the flowchart. In the error process, for example, an error notification indicating that the change is not reflected in the parameter file f#' in the DB container Cr#' is transmitted to the administrator terminal 203.

At step S1405, when the update of the parameter file PF' fails (step S1405: NO), the information processing device 202 executes the error process (step S1407), and ends the series of processes according to the flowchart. In the error processing, for example, an error notification indicating that the change is not reflected in the parameter file PF' used by the autonomous managing system MS' is transmitted to the administrator terminal 203.

The information processing device 202 may omit the process at step S1403. In this case, at step S1406, the information processing device 202 may use the changed parameter information to update the parameter file included in each container Cr' (including the DB container Cr#') of the disaster recovery environment E2.

As a result, the information processing device 202 can eliminate a difference between the parameter file PF' used by the autonomous managing system MS' and the parameter file f#' in the DB container Cr#' and reflect a change to the parameter file PF in the production environment E1 in the parameter file PF' in the disaster recovery environment E2.

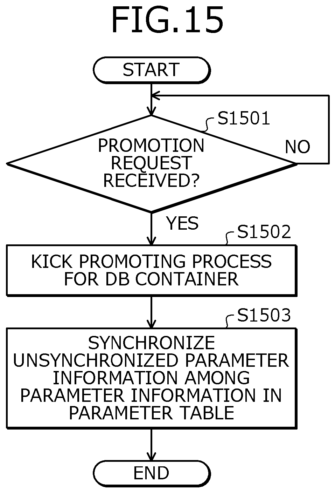

A procedure of a promoting process of the information processing device 202 of the disaster recovery environment E2 will be described with reference to Fig. 15.

Fig. 15 is a flowchart depicting an example of a procedure of the promoting process of the information processing device 202 of the disaster recovery environment E2. In the flowchart depicted in Fig. 15, the information processing device 202 determines whether a promotion request for the disaster recovery environment E2 has been received (step S1501). The promotion request of the disaster recovery environment E2 is performed, for example, by the system administrator executing a command for requesting promotion in the administrator terminal 203.

Here, the information processing device 202 waits to receive a promotion request of the disaster recovery environment E2 (step S1501: NO). When the information processing device 202 receives the promotion request of the disaster recovery environment E2 (step S1501: YES), the information processing device 202 kicks the promoting process for the DB container Cr#' (step S1502).

Then, the information processing device 202 synchronizes unsynchronized parameter information among the parameter information in the parameter table T#' with the parameter file in each container Cr' (step S1503), and ends the series of processes according to the flowchart.

Accordingly, the information processing device 202 can switch the DB container Cr' from the standby system to the actual system in response to a promotion request from a system administrator or the like. In addition, by synchronizing the unsynchronized parameter information, the information processing device 202 can eliminate a deviation between the parameter file PF' and the parameter file in each container Cr', for example, even in a situation in which the managing process as depicted in Fig. 14 is not normally completed due to some trouble caused by the occurrence of a disaster.

(Example)

Next, an example of the information processing system 200 will be described. First, a deployment example of containers in each environment (the production environment E1 and the disaster recovery environment E2) will be described.

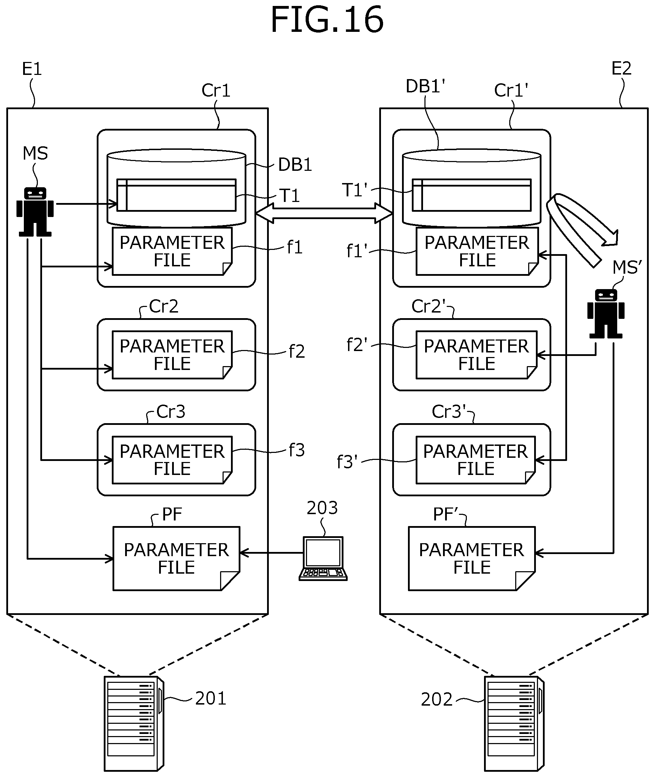

Fig. 16 is an explanatory diagram depicting an example of deployment of containers in each environment. In Fig. 16, a DB container Cr1, an application container Cr2, and an application container Cr3 are deployed in the production environment E1. The DB container Cr1 includes a database DB1 and a parameter file f1. The database DB1 includes a parameter table T1. The DB container Cr1 is controlled based on the parameter file f1.

The application container Cr2 includes a parameter file f2. The application container Cr2 is controlled based on the parameter file f2. The application container Cr3 includes a parameter file f3. The application container Cr3 is controlled based on the parameter file f3.

The autonomous managing system MS is disposed in the production environment E1. The autonomous managing system MS refers to the parameter file PF to manage the DB container Cr1, the application container Cr2, and the application container Cr3.

In the disaster recovery environment E2, a DB container Cr1', an application container Cr2', and an application container Cr3' are deployed. The DB container Cr1' corresponds to the DB container Cr1 of the production environment E1. The application container Cr2' corresponds to the application container Cr2 of the production environment E1. The application container Cr3' corresponds to the application container Cr3 of the production environment E1.

The autonomous managing system MS' is disposed in the disaster recovery environment E2. The autonomous managing system MS' manages the DB container Cr1', the application container Cr2', and the application container Cr3' with reference to the parameter file PF'.

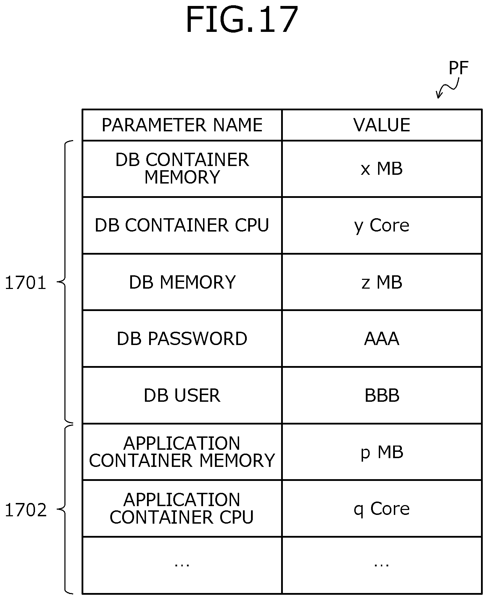

Here, a specific example of the parameter file PF will be described with reference to Fig. 17.

Fig. 17 is an explanatory diagram depicting a specific example of the parameter file PF. In Fig. 17, the parameter file PF is information related to management of the DB container Cr1, the application container Cr2, and the application container Cr3, which are referred to by the autonomous managing system MS.

The parameter file PF includes configuration information of the DB container and parameter setting values of the database body included in the DB container (for example, parameter information 1701). The parameter file PF includes configuration information of the application container (for example, parameter information 1702).

In building the production environment E1, the autonomous managing system MS deploys each container Cr (the DB container Cr1, the application container Cr2, and the application container Cr3) based on the parameter file PF, for example. The parameter files (the parameter files f1 to f3) included in each container Cr are created based on the parameter file PF.

For example, the parameter file f1 includes the same parameter values as the parameter information 1701. The parameter files f2 and f3 include the same parameter values as the parameter information 1702. However, the parameter file f1 may include the same parameter values as the parameter information 1702. The parameter files f2 and f3 may include the same parameter values as the parameter information 1701.

The parameter file PF' in the disaster recovery environment E2 corresponds to the parameter file PF in the production environment E1.

When building the disaster recovery environment E2, the autonomous managing system MS' deploys each container Cr' (the DB container Cr1', the application container Cr2', the application container Cr3') based on the parameter file PF', for example. The parameter files (the parameter files f1', f2', f3') included in each container Cr' are created based on the parameter file PF'.

The DB container Cr1 of the production environment E1 and the DB container Cr1' of the disaster recovery environment E2 are synchronized in real time by streaming replication.

Here, it is assumed that the parameter file PF used by the autonomous managing system MS is changed by the administrator terminal 203 (system administrator) in the production environment E1.

In this case, the autonomous managing system MS detects the change of the parameter file PF and obtains the changed parameter information from the parameter file PF. Then, the autonomous managing system MS updates the parameter files (the parameter files f1 to f3) of the containers Cr (the DB container Cr1, the application container Cr2, and the application container Cr3) using the changed parameter information, and writes the changed content to the parameter table T1 of the DB container Cr1.

Accordingly, when the parameter file PF used by the autonomous managing system MS is changed in the production environment E1, the autonomous managing system MS can eliminate a deviation between the parameter file PF and the parameter file in each container Cr.

When the parameter file f1 of the DB container Cr1 is updated and the changed content is written to the parameter table T1 of the DB container Cr1, the parameter table T1' of the DB container Cr1' of the disaster recovery environment E2 is synchronized with the parameter table T1 by streaming replication.

The autonomous managing system MS' periodically checks the parameter table T1' of the DB container Cr1' and detects a change in the parameter table T1'. The autonomous managing system MS' obtains the changed parameter information from the parameter file PF'. Then, the autonomous managing system MS' updates the parameter file PF' using the changed parameter information.

When the parameter file PF' is successfully updated, the autonomous managing system MS' updates the parameter files (the parameter files f1' to f3') included in the containers Cr' (the DB container Cr1', the application container Cr2', and the application container Cr3') using the changed parameter information.

As a result, the information processing device 202 can reflect the change to the parameter file PF in the production environment E1 in the parameter file PF' in the disaster recovery environment E2, and eliminate a difference between the parameter file PF' of the autonomous managing system MS' and the parameter file in each container Cr'.

As described above, the information processing device 201 according to the embodiment can detect a change in the parameter file PF referred to by the autonomous managing system MS in the production environment E1. The autonomous managing system MS is a managing unit that manages the containers Cr deployed in the production environment E1. The parameter file PF is information (management parameter information) related to management of the DB container Cr#, and includes, for example, configuration information of the DB container Cr# and values of parameters set in the database DB# included in the DB container Cr#. Then, according to the information processing device 201, in response to detection of a change in the parameter file PF, the parameter file f# included in the DB container Cr# can be updated according to the change, and the content of the change can be written in the parameter table T# provided in the database DB#.

Accordingly, when the parameter file PF in the production environment E1 is changed, the information processing device 201 can update the parameter file f# of the DB container Cr# according to the change and write the change content to the parameter table T#. Therefore, even when the parameter file PF is changed, the information processing device 201 can eliminate a deviation between the parameter file PF and the parameter file f# of the DB container Cr#. Further, the information processing device 201 can propagate the changed content of the parameter file PF to the disaster recovery environment E2 by using data synchronization between the production environment E1 and the disaster recovery environment E2.

According to the information processing device 202, it is possible to detect a change in the parameter table T#' in the database DB#' included in the DB container Cr#' in the disaster recovery environment E2. The DB container Cr#' is a container deployed in the disaster recovery environment E2 and synchronized with the DB container Cr# in the production environment E1 by the data synchronization function. The data synchronization function is, for example, streaming replication. Then, according to the information processing device 202, in response to detection of a change in the parameter table T#', the parameter file PF' referred to by the autonomous managing system MS' can be updated according to the change. The autonomous managing system MS' is a managing unit that manages containers Cr' deployed in the disaster recovery environment E2.

As a result, the information processing device 202 can eliminate a difference between the parameter file PF' used by the autonomous managing system MS' and the parameter file f#' in the DB container Cr#' and reflect a change to the parameter file PF in the production environment E1 in the parameter file PF' in the disaster recovery environment E2.

In addition, according to the information processing device 201, in the production environment E1, when the content of the detected change of the parameter file PF is written to the parameter table T# and the update of the parameter file f# according to the change fails, it is possible not to write the content of the change to the parameter table T#.

Accordingly, the information processing device 201 can reliably prevent a deviation from occurring between the parameter file PF referred to by the autonomous managing system MS and the parameter file f# of the DB container Cr#.

Further, according to the information processing device 202, when the parameter file PF' is successfully updated in the disaster recovery environment E2, the parameter file f#' in the DB container Cr#' can be updated according to the detected change in the parameter table T#'.

Accordingly, the information processing device 202 can reliably prevent a deviation from occurring between the parameter file PF' referred to by the autonomous managing system MS' and the parameter file f#' in the DB container Cr#'.

According to the information processing device 201, in response to detection of a change in the parameter file PF in the production environment E1, the parameter file included in another container different from the DB container Cr# among the containers Cr deployed in the production environment E1 can be updated according to the change. The other container is, for example, an application container that does not include a database.

Accordingly, the information processing device 201 can reflect the changed content of the parameter file PF in the parameter files of other containers in the production environment E1.

According to the information processing device 202, when the parameter file PF' is successfully updated in the disaster recovery environment E2, the parameter file included in another container different from the DB container Cr#' among the containers Cr' deployed in the disaster recovery environment E2 can be updated according to the detected change in the parameter table T#'.

As a result, the information processing device 202 can reflect the updated content of the parameter file PF' in the parameter files of other containers in the disaster recovery environment E2.

Thus, according to the information processing devices 201 and 202, it is possible to appropriately manage the parameter information (the parameter file PF, the parameter file f#, the parameter file PF', and the parameter file f#') related to the management of the containers (the DB containers Cr# and Cr#') that include databases (the databases DB# and DB#') in the redundant production environment E1 and disaster recovery environment E2.

In addition, according to the information processing devices 201 and 202, when the configuration of the production environment E1 is changed, the system administrator does not need to manually change the configuration of the disaster recovery environment E2, and it is possible to reduce human errors (operation mistakes) and costs related operation management. For example, by utilizing the streaming replication function that enables real-time synchronization, the system administrator can complete setup by merely deploying a DB container without separately deploying a module dedicated to parameter synchronization or the like.

Further, by utilizing the streaming replication function, when the parameter information of the production environment E1 is changed, the changed parameter information is automatically transmitted to the disaster recovery environment E2. Therefore, even when the production environment E1 goes down, the operation environment can be reproduced based on the parameter information included in the disaster recovery environment E2.

In addition, according to the information processing devices 201 and 202, it is possible to avoid a situation in which the autonomous managing system MS' cannot access the database DB#' in the DB container Cr#' and operation management cannot be performed, which occurs when authentication information such as a password of the database DB# is not transmitted when the production environment E1 is switched to the disaster recovery environment E2 when a disaster occurs.

In the above description, while the system (for example, a business system) is realized by containers (containers Cr and Cr') including an application and a database, the present invention is not limited hereto. For example, the system may be realized by a virtual machine including an application and a database.

The managing method described in the present embodiment can be realized by executing a program prepared in advance by a computer such as a personal computer or a workstation. The managing program is stored to a computer-readable recording medium such as a hard disk, a flexible disk, a CD-ROM, a DVD, or a USB memory, and is executed by being read from the recording medium by the computer. The managing program may be distributed via a network such as the Internet.

The information processing devices 201 and 202 described in the present embodiment can also be realized by an application specific IC such as a standard cell or a structured ASIC (Application Specific Integrated Circuit) or a PLD (Programmable Logic Device) such as an FPGA.

EXPLANATIONS OF LETTERS OR NUMERALS

101 managing device
101-1 first managing device
101-2 second managing device
110 first environment
111, 121 managing unit
112, 122 management parameter information
113 first container
114, 124 database
115, 125 control parameter information

116, 126 change history information
120 second environment
123 second container
200 information processing system
201, 202 information processing device
203 administrator terminal
210 network
300 bus
301 CPU
302 memory
303 disk drive
304 disk
305 communication I/F
306 portable recording medium I/F
307 portable recording medium
400, 500 controller
401 creating unit
402 first detecting unit
403 first updating unit
501 second detecting unit
502 second updating unit
600 system administrator
1701, 1702 parameter information

**Claims**

1. A managing device comprising a controller configured to:

   among a first environment and a second environment that are redundant,
   detect, under the first environment, a change in first management parameter information related to management of a first container that includes a first database, the first management parameter information being referred to by a first managing unit that manages a plurality of containers deployed in the first environment, including the first container;
   in response to detection of the change, update first control parameter information according to the change and write contents of the change into first change history information provided in the first database, the first control parameter information being included in the first container, related to control of the first container, and referred to by the first container;
   detect, under the second environment, a change in second change history information in a second database included in a second container deployed in the second environment and synchronized with the first container by a data synchronization function; and
   update, in response to detection of the change in the second change history information in the second database included in the second container, second management parameter information related to management of the second container and referred to by a second managing unit that manages a plurality of containers deployed in the second environment, including the second container.

2. The managing device according to claim 1, wherein under the first environment, when the contents of the detected change is written into the first change history information and updating of the first control parameter information according to the change fails, the controller does not write the content of the change into the first change history information.

3. The managing device according to claim 1, wherein the controller is further configured to update second control parameter information related to control of the second container when under the second environment, updating of the second management parameter information related to the management of the second container is successful, the controller updating the second control parameter information according to the detected change in the second change history information, the second control parameter information being included in the second container and referred to by the second container.

4. The managing device according to claim 3, wherein the controller is further configured to:

   update, in response to the detection of the change in the first management parameter information under the first environment, third control parameter information that is related to control of a third container, referred to by the third container and included in the third container that is different from the first container and among the plurality of containers deployed in the first environment, the controller updating the third control parameter information, according to the detected change in the first management parameter information under the first environment; and
   update, when updating of the second management parameter information is successful under the second environment, fourth control parameter information that is related to control of a fourth container, referred to by the fourth container and included in the fourth container that is different from the second container and among the plurality of containers deployed in the second environment, the controller updating the fourth control parameter information, according to the detected change in the change history information under the second environment.

5. The managing device according to claim 1, wherein the first management parameter information related to management of the first container includes configuration information of the first container and a value of a parameter set in the database included in the first container.

6. The managing device according to claim 1, wherein the data synchronization function is a streaming replication.

7. The managing device according to claim 1, wherein
   the first environment is a production environment, and
   the second environment is a disaster prevention environment.

8. A managing method executed by a computer, the method comprising:

   among a first environment and a second environment that are redundant,
   detecting, under the first environment, a change in first management parameter information related to management of a first container that includes a first database, the first management parameter information being referred to by a first managing unit that manages a plurality of containers deployed in the first environment, including the first container;
   in response to detecting the change, updating first control parameter information according to the change and writing contents of the change into first change history information provided in the first database, the first control parameter information being included in the first container, related to control of the first container, and referred to by the first container;
   detecting, under the second environment, a change in second change history information in a second database included in a second container deployed in the second environment and synchronized with the first container by a data synchronization function; and
   updating, in response to detecting the change in the second change history information in the second database included in the second container, second management parameter information related to management of the second container and referred to by a second managing unit that manages a plurality of containers deployed in the second environment, including the second container.

9. A managing method executed by a computer, the method comprising:

   among a first environment and a second environment that are redundant,
   under the first environment, in response to detection of a change in first management parameter information related to management of a first container including a first database, updating first control parameter information related to control of the first container and writing contents of the change into first change history information provided in the first database, the first management parameter information being referred to by a first managing unit that manages a plurality of containers deployed in the first environment, the first control parameter information being included in the first container, referred to by the first container, and updated according to the change;
   under the second environment, detecting a change in second change history information in a second database included in a second container deployed in the second environment and synchronized with the first container by a data synchronization function;
   updating, in response to detection of the change under the second environment, second management parameter information that is related to management of the second container and referred to by a second managing unit that manages a plurality of containers deployed in the second environment, the second management parameter information being updated according to the detected change under the second environment.

10. A managing program for causing a computer to execute a process, the process comprising:

among a first environment and a second environment that are redundant,

detecting, under the first environment, a change in first management parameter information related to management of a first container that includes a first database, the first management parameter information being referred to by a first managing unit that manages a plurality of containers deployed in the first environment, including the first container;

in response to detecting the change, updating first control parameter information according to the change and writing contents of the change into first change history information provided in the first database, the first control parameter information being included in the first container, related to control of the first container, and referred to by the first container;

detecting, under the second environment, a change in second change history information in a second database included in a second container deployed in the second environment and synchronized with the first container by a data synchronization function; and

updating, in response to detecting the change in the second change history information in the second database included in the second container, second management parameter information related to management of the second container and referred to by a second managing unit that manages a plurality of containers deployed in the second environment, including the second container.

11. A managing program for causing a computer to execute a process, the process comprising:

among a first environment and a second environment that are redundant,

under the first environment, in response to detection of a change in first management parameter information related to management of a first container including a first database, updating first control parameter information related to control of the first container and writing contents of the change into first change history information provided in the first database, the first management parameter information being referred to by a first managing unit that manages a plurality of containers deployed in the first environment, the first control parameter information being included in the first container, referred to by the first container, and updated according to the change;

under the second environment, detecting a change in second change history information in a second database included in a second container deployed in the second environment and synchronized with the first container by a data synchronization function;

updating, in response to detection of the change under the second environment, second management parameter information that is related to management of the second container and referred to by a second managing unit that manages a plurality of containers deployed in the second environment, the second management parameter information being updated according to the detected change under the second environment.

# FIG.1

# FIG.2

200

E1

MS

CONTAINER — Cr

201

E2

MS'

CONTAINER — Cr'

202

210

203

# FIG.3

201, ETC.

304
DISK

301
CPU

302
MEMORY

303
DISK DRIVE

300

305
COMMUNICATIONS I/F

306
PORTABLE RECORDING MEDIUM I/F

210
NETWORK

307
PORTABLE RECORDING MEDIUM

# FIG.4

201

INFORMATION PROCESSING DEVICE

CONTROLLER 400

401
CREATING UNIT

402
FIRST DETECTING UNIT

403
FIRST UPDATING UNIT

PARAMETER FILE

PF

Cr#

PARAMETER TABLE — DB#

— T#

PARAMETER FILE — f#

# FIG.5

202

INFORMATION PROCESSING DEVICE

CONTROLLER 500

501
SECOND DETECTING UNIT

502
SECOND UPDATING UNIT

PARAMETER FILE

PF′

Cr#′

PARAMETER TABLE — DB#′

— T#′

PARAMETER FILE — f#′

# FIG.6

# FIG.7

E1

Cr1

MS

PARAMETER TABLE

DB1

PARAMETER
FILE

T1

f1

PARAMETER
FILE

PF

# FIG.8

# FIG.9

# FIG.10

T1

| PARAMETER NAME | VALUE | TIME STAMP | UPDATE VALUE | UPDATE TIME STAMP |
|---|---|---|---|---|
| DB PASSWORD | AAA | 2023-06-09 00:00:00.000000 | | |
| DB CONTAINER MEMORY | 200MB | 2023-06-09 00:00:00.000000 | | |
| DB CONTAINER CPU | 0.2 Core | 2023-06-09 00:00:00.000000 | | |
| DB MEMORY | 100MB | 2023-06-09 00:00:00.000000 | | |
| NUMBER OF DBs | 1 | 2023-06-09 00:00:00.000000 | | |
| ... | ... | ... | ... | ... |

1000-1
1000-2
1000-3
1000-4
1000-5

# FIG.11

T1

| PARAMETER NAME | VALUE | TIME STAMP | UPDATE VALUE | UPDATE TIME STAMP |
|---|---|---|---|---|
| DB PASSWORD | AAA | 2023-06-09 00:00:00.000000 | | |
| DB CONTAINER MEMORY | 200MB | 2023-06-09 00:00:00.000000 | **400MB** | **2023-06-10 00:00:00.000000** |
| DB CONTAINER CPU | 0.2 Core | 2023-06-09 00:00:00.000000 | | |
| DB MEMORY | 100MB | 2023-06-09 00:00:00.000000 | **200MB** | **2023-06-10 00:00:00.000000** |
| NUMBER OF DBs | 1 | 2023-06-09 00:00:00.000000 | | |
| ... | ... | ... | ... | ... |

# FIG.12

```
        ( START )
            │
            ▼           ┌─ S1201
┌─────────────────────────┐
│   DEPLOY DB CONTAINER    │
└─────────────────────────┘
            │
            ▼           ┌─ S1202
┌─────────────────────────┐
│  CREATE PARAMETER TABLE  │
└─────────────────────────┘
            │
            ▼
         ( END )
```

# FIG.13

```
              ( START )
                  │
                  ▼                    ┌─ S1301
            ╱───────────────────────────────╲
           ╱         HAS CHANGE IN            ╲   NO
          ╱  PARAMETER FILE USED BY AUTONOMOUS  ╲────┐
          ╲   MANAGEMENT SYSTEM BEEN            ╱    │
           ╲         DETECTED?                 ╱     │
            ╲───────────────────────────────╱       │
                  │ YES        ┌─ S1302             │
                  ▼                                  │
    ┌────────────────────────────────────┐          │
    │  OBTAIN UPDATED PARAMETER INFORMATION │        │
    └────────────────────────────────────┘          │
                  │           ┌─ S1303              │
                  ▼                                  │
    ┌────────────────────────────────────┐          │
    │  UPDATE PARAMETER FILE IN DB CONTAINER │       │
    └────────────────────────────────────┘          │
                  │                    ┌─ S1304      │
                  ▼                                  │
            ╱───────────────────────────────╲       │
           ╱      PARAMETER FILE IN           ╲  NO  │
          ╱    CONTAINER SUCCESSFULLY          ╲─────┤
          ╲         UPDATED?                   ╱     │
            ╲───────────────────────────────╱       │
                  │ YES        ┌─ S1305             │
                  ▼                                  │
    ┌────────────────────────────────────┐          │
    │      WRITE INTO PARAMETER TABLE      │         │
    └────────────────────────────────────┘          │
                  │◄─────────────────────────────────┘
                  ▼
               ( END )
```

# FIG.14

```
                    START

                      │
                      ▼
                  ┌S1401
         ╱─────────────────────╲
        ╱      CHANGE IN         ╲        NO
        ╲   PARAMETER TABLE      ╱──────────┐
         ╲     DETECTED?        ╱           │
          ╲───────────────────╱            │
                  │ YES   ┌S1402           │
                  ▼                         │
        ┌──────────────────────────┐        │
        │ OBTAIN UPDATED PARAMETER │        │
        │        INFORMATION       │        │
        └──────────────────────────┘        │
                  │                          │
                  ▼  ┌S1403                  │
         ╱─────────────────────╲             │
        ╱   CHANGE REFLECTED    ╲     NO      │
        ╲  IN PARAMETER FILE IN ╱────────────┼────┐
         ╲   DB CONTAINER?      ╱            │    │
          ╲───────────────────╱             │    │
                  │ YES  ┌S1404             │    │
                  ▼                          │    │
        ┌──────────────────────────┐        │    │
        │   UPDATE PARAMETER FILE  │        │    │
        │  USED BY AUTONOMOUS      │        │    │
        │   MANAGEMENT SYSTEM      │        │    │
        └──────────────────────────┘        │    │
                  │                          │    │
                  ▼  ┌S1405                  │    │
         ╱─────────────────────╲             │    │
        ╱     UPDATE OF         ╲    NO       │    │
        ╲   PARAMETER FILE      ╱─────────────┼────┤
         ╲    SUCCESSFUL?       ╱            │    │
          ╲───────────────────╱             │    │
                  │ YES  ┌S1406             │    │ ┌S1407
                  ▼                                ▼
    ┌──────────────────────────┐    ┌─────────────────────────────┐
    │ UPDATE PARAMETER FILE IN │    │  EXECUTE ERROR PROCESSING   │
    │      ANOTHER CONTAINER   │    └─────────────────────────────┘
    └──────────────────────────┘                  │
                  │                                │
                  ▼◄───────────────────────────────┘
                 END
```

# FIG.15

START

PROMOTION
REQUEST
RECEIVED?     S1501      NO

YES     S1502

KICK PROMOTING PROCESS
FOR DB CONTAINER

S1503

SYNCHRONIZE
UNSYNCHRONIZED PARAMETER
INFORMATION AMONG
PARAMETER INFORMATION IN
PARAMETER TABLE

END

# FIG.16

# FIG.17

PF

| PARAMETER NAME | VALUE |
|---|---|
| DB CONTAINER MEMORY | x MB |
| DB CONTAINER CPU | y Core |
| DB MEMORY | z MB |
| DB PASSWORD | AAA |
| DB USER | BBB |
| APPLICATION CONTAINER MEMORY | p MB |
| APPLICATION CONTAINER CPU | q Core |
| ... | ... |

1701

1702

## INTERNATIONAL SEARCH REPORT

| International application No. |
|---|
| **PCT/JP2023/034168** |

**A.    CLASSIFICATION OF SUBJECT MATTER**

*G06F 16/178*(2019.01)i; *G06F 11/20*(2006.01)i
FI:    G06F16/178; G06F11/20 697

According to International Patent Classification (IPC) or to both national classification and IPC

**B.    FIELDS SEARCHED**

Minimum documentation searched (classification system followed by classification symbols)

G06F16/10-16/29; G06F11/16-11/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2020-095547 A (HITACHI, LTD.) 18 June 2020 (2020-06-18) | 1-11 |
| A | JP 2017-097791 A (BANK OF TOKYO-MITSUBISHI UFJ, LTD.) 01 June 2017 (2017-06-01) | 1-11 |
| A | EP 3037964 A1 (ROVIO ENTERTAINMENT LTD.) 29 June 2016 (2016-06-29) | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/034168**

| Patent document cited in search report | | | Publication date (day/month/year) | Patent family member(s) | | | Publication date (day/month/year) |
|---|---|---|---|---|---|---|---|
| JP | 2020-095547 | A | 18 June 2020 | US | 2020/0192693 | A1 | |
| JP | 2017-097791 | A | 01 June 2017 | (Family: none) | | | |
| EP | 3037964 | A1 | 29 June 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018088235 A

- JP H6290125 A